# EUROPÄISCHE PATENTSCHRIFT

(11) **EP 1 553 018 B1**
(45) Veröffentlichungstag und Bekanntmachung des Hinweises auf die Patenterteilung: **23.01.2008**
(21) Anmeldenummer: 04030659.9
(22) Anmeldetag: 23.12.2004
(51) Int. Cl.: B64D 10/00, A62B 18/02

(54) **Passagiersauerstoffmaske**
Passenger oxygen mask
Masque à oxygène pour passager

(30) Priorität: 10.01.2004 DE 102004001534
(43) Veröffentlichungstag der Anmeldung: 13.07.2005
(73) Patentinhaber: Dräger Aerospace GmbH, 23560 Lübeck (DE)
(72) Erfinder: Rittner, Wolfgang, 23623 Ahrensbök/OT Siblin (DE); Meier, Herbert, 23556 Lübeck (DE); Meckes, Rüdiger, 23919 Berkenthin (DE); Weinmann, Hasso, 23564 Lübeck (DE); Lanza, Chris, Orchard Park NY 14127-4195 (US); Marquardt, Wolfgang, Kirkland WA 98034 (US)
(74) Vertreter: Vollmann, Heiko

(56) Entgegenhaltungen:
- US-A- 5 074 297
- US-A- 5 121 745
- PATENT ABSTRACTS OF JAPAN Bd. 2003, Nr. 12, 5. Dezember 2003 (2003-12-05) & JP 2004 275694 A (HIRONO MASAHIRO), 7. Oktober 2004 (2004-10-07)

## Beschreibung

Die Erfindung betrifft eine Passagiersauerstoffmaske gemäß den im Oberbegriff des Anspruchs 1 angegebenen Merkmalen. Eine solche Maske ist aus US 5074297 bekannt.

Für die Notfallsituation, wenn es während des Fluges in großer Höhe zu einem plötzlichen Druckabfall kommt, ist in den Flugzeugen fast aller Luftfahrtunternehmen für jeden Fluggastsitz eine Sauerstoffmaske vorgesehen. Die Passagiersauerstoffmasken befinden sich in Serviceeinheiten, die für jede Sitzgruppe üblicherweise unterhalb der im oberen Kabinenbereich vorgesehenen Gepäckablagen angeordnet sind. Bei Erreichen eines bestimmten Druckniveaus fallen die Sauerstoffmasken an Bändern hängend automatisch aus den Serviceeinheiten. Die Bänder sind mit einem Mechanismus verbunden, der beim Herunterziehen der Masken die Sauerstoffversorgung aktiviert.

In den Serviceeinheiten sind neben den Sauerstoffmasken auch die Sauerstoffgeneratoren bzw. Anschlussarmaturen einer externen Sauerstoffquelle sowie Komfortelemente wie z. B. Leseleuchten, Stewardruftasten, Belüftungsdüsen, optische Anzeigen und die Versorgungsleitungen dieser Elemente eingebaut. Entsprechend klein ist das Raumangebot für diese Sicherheits- und Komfortelemente.

Hiervon ausgehend liegt der Erfindung die Aufgabe zugrunde, eine Passagiersauerstoffmaske zu schaffen, die dem geringen Raumangebot in der Serviceeinheit optimal angepasst ist, dabei aber die ergonomischen Erfordernisse für die Atemsituation erfüllt.

Diese Aufgabe wird durch eine Passagiersauerstoffmaske mit den in Anspruch 1 angegebenen Merkmalen gelöst. Bevorzugte Ausführungsformen sind in den Unteransprüchen, der nachfolgenden Beschreibung und der Zeichnung angegeben.

Die erfindungsmäßige Lösung, zumindest Teile des Maskenkörpers einer Passagiersauerstoffmaske faltbar zu gestalten, ermöglicht es, die axiale Bauhöhe des Maskenkörpers, d. h., den Abstand zwischen dem an das Gesicht anschließenden Dichtrahmen des Maskenkörpers und dem davon abgewandten (proximalen) Ende des Maskenkörpers, an dem sich ein Auffangbeutel bzw. Sparbeutel mit einem Schlauch für die Sauerstoffversorgung anschließt, durch Falten zu verringern. Dabei ist die Anzahl der Falten grundsätzlich beliebig. Auf diese Weise kann das für die Unterbringung der Sauerstoffmaske in der Serviceeinheit benötigte Volumen erheblich reduziert werden. Die Faltung erfolgt durch mechanische Krafteinwirkung zum Beispiel in der Einbaulage der Serviceeinheit.

Der Maskenkörper ist im Bereich des faltbaren Abschnitts selbsttätig entfaltend ausgebildet. Hierdurch ist sichergestellt, dass die Passagiersauerstoffmasken, die während des normalen Flugbetriebs gefaltet in den Serviceeinheiten verstaut sind und bei einem Druckverlust aus diesen herausfallen, sich selbsttätig entfalten und damit einsatzbereit den Passagieren zur Verfügung stehen.

Vorteilhafterweise ist der faltbare Abschnitt des Maskenkörpers an der vom Gesicht abweisenden Seite des an das Gesicht anschließenden Dichtrahmens des Maskenkörpers angeordnet. So kann der Maskenkörper, der im Wesentlichen die Form einer Schale aufweist und aus halbelastischem bzw. elastischem Material besteht, gestaucht werden, während der Dichtrahmen, dessen Kontur der Gesichtsform im Maskenbereich angepasst ist, eigensteif und nicht manipulierbar ist.

Bevorzugt ist der faltbare Abschnitt des Maskenkörpers faltenbalgartig ausgebildet, d. h., die Aussenwand des Maskenkörpers ist in diesem Abschnitt dergestalt gefaltet, dass sich Sättel und Mulden regelmäßig abwechseln. Die faltenbalgartige Ausbildung eines Abschnitts des Maskenkörpers ermöglicht die Verringerung der Bauhöhe des Maskenkörpers, da dieser so weit gestaucht werden kann, bis die einen Sattel bzw. eine Mulde begrenzenden Schenkel einer Falte nahezu aufeinander aufliegen.

Vorteilhaft wird der faltbare Abschnitt des Maskenkörpers durch Knickfalten gebildet. Bei dieser Faltung bilden die Schenkel der Sättel und Mulden Kanten. Diese Kanten bilden vorbestimmte Knickstellen für die Stauchung des Maskenkörpers.

An Stelle der Knickfalten kann der faltbare Abschnitt des Maskenkörpers eine wellenförmige Faltung aufweisen. Hierdurch ergibt sich ein gleichmäßiger Spannungsverlauf in der Wandung des gefalteten Bereichs und somit eine andere Materialbeanspruchung, was je nach eingesetztem Material von Vorteil sein kann.

Bevorzugt weist der Maskenkörper formstabile Tragringe auf, welche durch dazwischen angeordnete, elastische Manschetten verbunden sind. Die Tragringe, deren Formstabilität durch eine vergrößerte Wandstärke, Formgebung und/oder durch Verwendung eines verwindungssteiferen Materials erhöht ist, sind am Umfang des Maskenkörpers angeordnet und verleihen ihm in radialer Richtung die nötige Stabilität. Die zwischen den Tragringen vorgesehenen elastischen Manschetten ermöglichen die Stauchung des Maskenkörpers in Richtung seiner Bauhöhe.

Vorteilhafterweise weist der faltbare Abschnitt des Maskenkörpers eine Federwendel auf. Die Federwendel umringt den elastischen Maskenkörper oder zumindest einen Teil desselben spiralförmig. Bei einer Stauchung wird der Maskenkörper mit der Federwendel gegen die Wirkung der Federkraft der Federwendel zusammengedrückt. Entfällt die Stauchkraft, entspannt sich die Federwendel, so dass der Maskenkörper seine einsatzbereite Form annimmt.

Zweckmäßigerweise ist eine separate Federwendel in dem Maskenkörper eingegliedert. So kann sie während der Herstellung des Maskenkörpers in diesen eingegossen werden, ohne dass sich die Struktur der Federwendel an den Oberflächen des Maskenkörpers abzeichnet.

Vorteilhaft kann die Federwendel (20) auch als integrale spiralförmige Materialverdickung des Maskenkörpers (2") ausgebildet sein. Auf diese Weise wird keine separate Federwendel, die an den Maskenkörper befestigt bzw. eingegossen werden muss, benötigt.

Bevorzugt ist die Federwendel an einer Wand des Maskenkörpers angeordnet. Hierbei wird die Federwendel vorzugsweise an der Innenseite des Maskenkörpers befestigt.

Die Erfindung ist nachfolgend anhand von in den Zeichnungen dargestellten Ausführungsbeispielen erläutert. Es zeigen:
- Fig. 1: eine Prinzipskizze eines Maskenkörpers mit einem faltbaren Abschnitt mit Knickfalten,
- Fig. 2: eine Prinzipskizze eines Maskenkörpers mit formstabilen Tragringen und dazwischen angeordneten elastischen Manschetten,
- Fig. 3: eine Prinzipskizze eines Maskenkörpers, der eine Federwendel aufweist und
- Fig. 4: eine Prinzipskizze eines Maskenkörpers mit einer nach innen gerichteten Faltung in einer Schnittansicht.

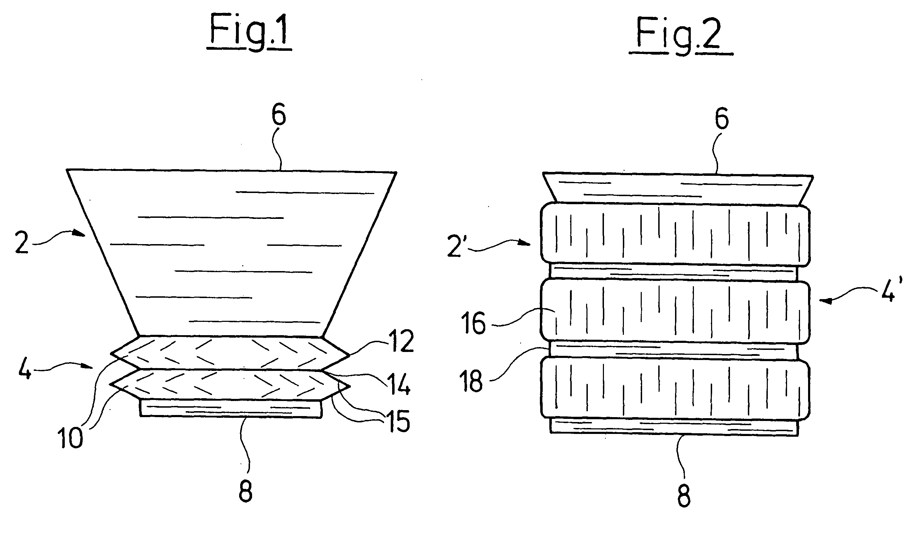

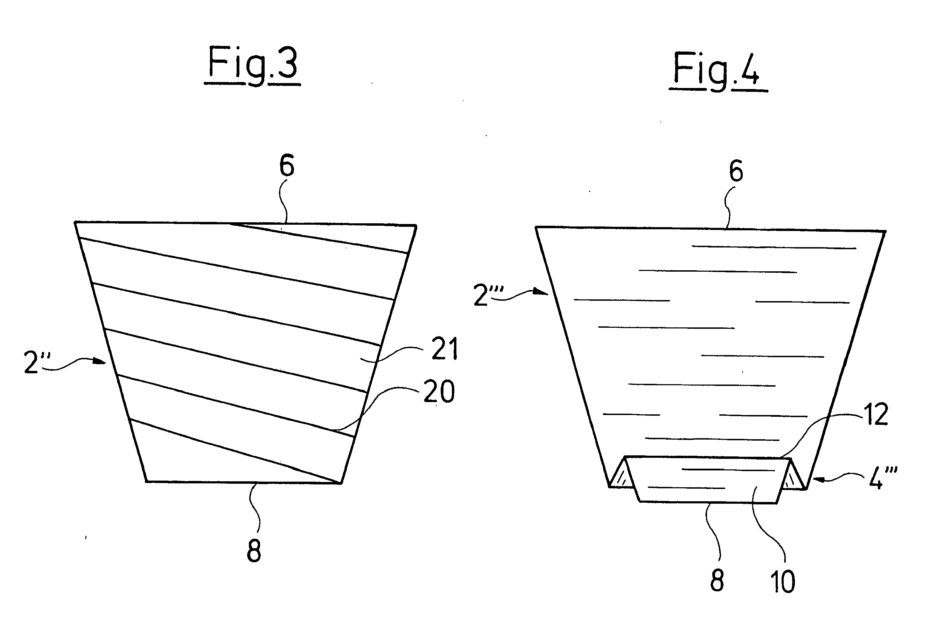

Die Fig. 1 zeigt eine Prinzipskizze eines Maskenkörpers 2 mit einem faltbaren Abschnitt 4, der durch Knickfalten 10 gebildet wird. Der Maskenkörper 2 hat die Form eines hohlen Kegelstumpfs, wobei die Grundfläche des Kegelstumpfs an die Gesichtsform angepasst ist und durch ein entsprechend geformten Dichtrahmen 6, der im Einsatzfall an das Gesicht angelegt wird, umgrenzt wird. An dem, der Grundfläche abgewandten Anschluss 8, der in den Maskenkörper 2 integriert- oder als separates Bauteil ausgebildet ist, sind die (hier nicht im einzelnen beschrieben) Elemente zur Sauerstoffzu- und abfuhr in an sich bekannter Weise angeordnet. Zwischen dem Dichtrahmen 6 und dem Anschluss 8 befindet sich nahe dem Anschluss 8 der faltbare Abschnitt 4. Dieser hat die Form eines Faltenbalgs und besteht in Fig. 1 aus zwei Knickfalten 10, die entfaltet dargestellt sind. Die Knickfalten 10 sind bezogen auf den Maskenkörper 2 außen liegend , können aber auch, wie in Fig. 4 dargestellt, innen liegend angeordnet sein. Die Knickfalten 10 bilden umlaufende Sättel 12 und Mulden 14 und werden durch Faltenschenkel 15 gebildet. Zusammengefaltet liegen die ringförmigen Faltenschenkel 15 jeweils eines Sattels 12 bzw. einer Mulde 14 nahezu aufeinander auf.

In Fig. 2 ist eine Ausführungsvariante eines Maskenkörpers 2' dargestellt, der aus einem faltbaren Abschnitt 4', der aus formstabilen Tragringen 16 und dazwischen angeordneten elastischen Manschetten 18 gebildet wird. Der faltbare Abschnitt 4' in Fig. 2 besteht aus drei Tragringen 16 und zwei Manschetten 18. Die wulstartigen Tragringe 16 sind ringförmig und bilden den Tragkörper des Maskenkörpers 2. Zwischen ihnen sind zurückgesetzt die elastischen Manschetten 18 angeordnet, die bei axialer Stauchung eingefaltet werden und bei Freigabe selbsttätig in die in Fig. 2 dargestellte gestreckte Stellung ausfahren.

Fig. 3 zeigt eine Ausführung eines Maskenkörpers 2", der eine Federwendel 20 aufweist. Die Federwendel 20 erstreckt sich über die gesamte Umfangsfläche des Maskenkörpers 2" zwischen dem Dichtrahmen 6 und dem Anschluss 8 und weist entsprechend der Form des Maskenkörpers 2" die Form einer sich konisch erweiternden Spirale auf. Die Federwendel 20 bildet hier den eigentlichen Tragkörper des Maskenkörpers 2" und sorgt dafür, dass sich dieser nach Freigabe selbsttätig in die in Fig. 3 dargestellte Stellung entfaltet. Die Federwendel 20 liegt an der Innenseite einer elastischen Haut 21 bzw. ist in eine solche eingegliedert. Die Haut 21 ist weichelastisch und nicht eigenstabil, so dass sie sich bei Krafteinwirkung auf die Feder in axialer Richtung einfaltet. Diese Ausführung ist besonders raumsparend faltbar, da nahezu der gesamte Maskenkörper 2" einfaltbar ist und lediglich ein im Wesentlich eigenstabiler Dichtrahmen 6 und sowie der Anschluss 8 verstärkt ausgebildet sind. Die Federwendel 20 kann durch eine separate Feder oder durch eine integrale spiralförmige Materialverdickung des Materials des Maskenkörpers 2" gebildet sein.

Eine Schnittansicht eines Maskenkörpers 2'" mit einer nach innen gerichteten Faltung in einem Abschnitt 4'" ist in Fig. 4 dargestellt. Die Faltung ist dort ebenfalls faltenbalgartig, wie bei der anhand von Fig. 1 dargestellten Ausführungsvariante, jedoch liegt sie innerhalb der durch den eigentlichen Maskenkörper 2'" gebildeten, im Wesentlichen kegelstumpfförmigen Außenkontur. Die Faltung besteht hier aus einer Knickfalte 11, die direkt an dem Anschluss 8 anschließt.

### Bezugszeichenliste

- 2: - Maskenkörper in Fig. 1
- 2': - Maskenkörper in Fig. 2
- 2": - Maskenkörper in Fig. 3
- 2'": - Maskenkörper in Fig. 4
- 4: - faltbarer Abschnitt in Fig. 1
- 4': - faltbarer Abschnitt in Fig. 2
- 4": - faltbarer Abschnitt in Fig. 3
- 4'": - faltbarer Abschnitt in Fig. 4
- 6: - Dichtrahmen
- 8: - Anschluss
- 10: - Knickfalte
- 12: - Sattel
- 14: - Mulde
- 15: - Faltenschenkel
- 16: - Tragring
- 18: - Manschette
- 20: - Federwendel
- 21: - Haut

## Patentansprüche

1. Passagiersauerstoffmaske mit einem Maskenkörper (2; 2'; 2"; 2"'), der zumindest abschnittsweise zur Verringerung der axialen Bauhöhe faltbar ist, **dadurch gekennzeichnet, dass** ein faltbarer Abschnitt (4; 4'; 4"; 4"') des Maskenkörpers (2; 2'; 2"; 2"') selbsttätig entfaltend ausgebildet ist.

2. Passagiersauerstoffmaske nach Anspruch 1, **dadurch gekennzeichnet, dass** der faltbare Abschnitt (4; 4'; 4"; 4"') des Maskenkörpers (2; 2'; 2"; 2"') an der vom Gesicht abweisenden Seite eines an das Gesicht anschließenden Dichtrahmens (6) des Maskenkörpers (2; 2'; 2"; 2"') angeordnet ist.

3. Passagiersauerstoffmaske nach einem der vorhergehenden Ansprüche, **dadurch gekennzeichnet, dass** der faltbare Abschnitt (4; 4"') des Maskenkörpers (2; 2"') faltenbalgartig ausgebildet ist.

4. Passagiersauerstoffmaske nach einem der vorhergehenden Ansprüche, **dadurch gekennzeichnet, dass** der faltbare Abschnitt (4; 4"') des Maskenkörpers (2; 2"') durch Knickfalten (10) gebildet ist.

5. Passagiersauerstoffmaske nach einem der Ansprüche 1 und 2, **dadurch gekennzeichnet, dass** der faltbare Abschnitt des Maskenkörpers eine wellenförmige Faltung aufweist.

6. Passagiersauerstoffmaske nach einem der Ansprüche 1 und 2, **dadurch gekennzeichnet, dass** der faltbare Abschnitt (4') des Maskenkörpers (2') formstabile Tragringe (16) aufweist, welche durch dazwischen angeordnete, elastische Manschetten (18) verbunden sind.

7. Passagiersauerstoffmaske nach einem der vorhergehenden Ansprüche, **dadurch gekennzeichnet, dass** der faltbare Abschnitt (4") des Maskenkörpers (2") eine Federwendel (20) aufweist.

8. Passagiersauerstoffmaske nach Anspruch 7, **dadurch gekennzeichnet, dass** eine separate Federwendel (20) in dem Maskenkörper (2") eingegliedert ist.

9. Passagiersauerstoffmaske nach Anspruch 7, **dadurch gekennzeichnet, dass** die Federwendel (20) als integrale spiralförmige Materialverdickung des Maskenkörpers (2") ausgebildet ist.

10. Passagiersauerstoffmaske nach Anspruch 7, **dadurch gekennzeichnet, dass** die Federwendel (20) an einer Wand des Maskenkörpers (2") angeordnet ist.

## Claims

1. A passenger oxygen mask with a mask body (2; 2'; 2"; 2"') which is collapsible at least in sections, for reducing the axial overall height, **characterised in that** a collapsible section (4; 4'; 4"; 4"') of the mask body (2; 2'; 2"; 2"') is designed in an automatically unfolding manner.

2. A passenger oxygen mask according to claim 1, **characterised in that** the collapsible section (4; 4'; 4"; 4"') of the mask body (2; 2'; 2"; 2"') is arranged on that side of a sealing frame (6) of the mask body (2; 2'; 2"; 2"') connecting to the face, which is distant to the face.

3. A passenger oxygen mask according to one of the preceding claims, **characterised in that** the collapsible section (4; 4"') of the mask body (2; 2"') is designed in the manner of a bellows.

4. A passenger oxygen mask according to one of the preceding claims, **characterised in that** the collapsible section (4; 4"') of the mask body (2; 2"') is formed by crease folds (10).

5. A passenger oxygen mask according to one of the claims 1 and 2, **characterised in that** the collapsible section of the mask body has a wavelike folding.

6. A passenger oxygen mask according to one of the claims 1 and 2, **characterised in that** the collapsible section (4') of the mask body (2') comprises shape-stable support rings (16) which are connected by elastic sleeves (18) arranged therebetween.

7. A passenger oxygen mask according to one of the preceding claims, **characterised in that** the collapsible section (4") of the mask body (2") comprises a spring helix (20).

8. A passenger oxygen mask according to claim 7, **characterised in that** a separate spring helix (20) is incorporated into the mask body (2").

9. A passenger oxygen mask according to claim 7, **characterised in that** the spring helix (20) is designed as an integral, spiral-shaped material thickening of the mask body (2").

10. A passenger oxygen mask according to claim 7, **characterised in that** the spring helix (20) is arranged on a wall of the mask body (2").

## Revendications

1. Masque à oxygène pour passager comportant un corps de masque (2 ; 2' ; 2" ; 2"') pliable au moins en partie pour réduire l'encombrement axial, **caractérisé en ce qu'**une partie pliable (4 ; 4' ; 4" ; 4"') du corps de masque (2 ; 2' ; 2" ; 2'") est réalisée de façon à se déplier automatiquement.

2. Masque à oxygène pour passager selon la revendication 1, **caractérisé en ce que** la partie pliable (4 ; 4' ; 4" ; 4'") du corps de masque (2 ; 2' ; 2" ; 2"') est disposée du côté éloigné du visage d'un cadre étanche (6), se raccordant au visage, du corps de masque (2 ; 2' ; 2" ; 2"').

3. Masque à oxygène pour passager selon l'une des revendications précédentes, **caractérisé en ce que** la partie pliable (4 ; 4"') du corps de masque (2 ; 2"') est réalisée en forme de soufflet.

4. Masque à oxygène pour passager selon l'une des revendications précédentes, **caractérisé en ce que** la partie pliable (4 ; 4"') du corps de masque (2 ; 2"') comporte des plis (10).

5. Masque à oxygène pour passager selon l'une des revendications 1 et 2, **caractérisé en ce que** la partie pliable du corps de masque présente un pliage ondulé.

6. Masque à oxygène pour passager selon l'une des revendications 1 et 2, **caractérisé en ce que** la partie pliable (4') du corps de masque (2') comporte des bagues de support (16) de forme stable, qui sont assemblées par des manchettes (18) élastiques disposées entre elles.

7. Masque à oxygène pour passager selon l'une des revendications précédentes, **caractérisé en ce que** la partie pliable (4") du corps de masque (2") présente une spirale élastique (20).

8. Masque à oxygène pour passager selon la revendication 7, **caractérisé en ce qu'**une spirale élastique (20) séparée est intégrée dans le corps de masque (2").

9. Masque à oxygène pour passager selon la revendication 7, **caractérisé en ce que** la spirale élastique (20) est réalisée en tant qu'épaississement, en forme de spirale, d'une pièce avec le matériau du corps de masque (2").

10. Masque à oxygène pour passager selon la revendication 7, **caractérisé en ce que** la spirale élastique (20) est disposée sur une paroi du corps de masque (2").
